# EUROPEAN PATENT APPLICATION

(11) **EP 4 216 090 A1**
(43) Date of publication of application: **26.07.2023**
(21) Application number: 21881576.9
(22) Date of filing: 23.06.2021
(51) Int. Cl.: G06F 21/60, G06F 21/31

(54) **ASSET ACCESS CONTROL METHOD, APPARATUS AND DEVICE, AND MEDIUM**

(30) Priority: 20.10.2020 CN 202011126183; 27.11.2020 CN 202011361997
(71) Applicant: Huawei Cloud Computing Technologies Co., Ltd., Guizhou 550025 (CN)
(72) Inventor: WANG, Xianlei, Shenzhen, Guangdong 518129 (CN)
(74) Representative: Isarpatent
(86) International application number: PCT/CN2021/101752
(87) International publication number: WO 2022/083156

(57) **Abstract**

This application provides an asset access control method. The method includes: obtaining a first identity feature of an application chain, where the first identity feature of the application chain comes from logic of one or more applications in the application chain; and when the first identity feature of the application chain matches a second identity feature that is of the application chain and that is recorded in an application feature library, allowing the application chain to access an asset. In the method, the internal first identity feature of the application chain is used to replace an external cryptographic feature for identity identification, and access control is performed on the asset based on an identity identification result, thereby avoiding an asset security risk caused by spoofing or tampering of an application, and ensuring asset security.

## Description

### TECHNICAL FIELD

This application relates to the field of computer technologies, and in particular, to an asset access control method, an apparatus, a device, and a computer-readable storage medium.

### BACKGROUND

An application is a program that runs as an independent entity. A single application or a plurality of applications that have an invocation relationship may form an application chain. The application chain may be used as a whole to access an asset. The asset is a resource that can produce benefits, for example, may be a credential or an application programming interface (application programming interface, API) for accessing a service.

With increasing security requirements of users, asset access control has become a hot research direction. Currently, in the industry, identity identification is mainly performed on an application based on a cryptographic feature. For example, identity identification is performed on the application based on an authentication factor such as a password, a key, or a certificate, and then access control is performed based on an identity identification result.

However, any application that obtains an authentication factor of a target application may spoof the target application to access assets. This brings great challenges to asset security. In the industry, a reliable asset access control method needs to be provided urgently, to ensure asset security.

### SUMMARY

This application provides an asset access control method. In the method, an internal first identity feature of an application chain is used to replace an external cryptographic feature for identity identification, and access control is performed on the asset based on an identity identification result, thereby avoiding an asset security risk caused by spoofing or tampering of an application, and ensuring asset security. This application further provides a system, an apparatus, a device, a computer-readable storage medium, and a computer program product corresponding to the foregoing method.

According to a first aspect, this application provides an asset access control method. The method is specifically used to control access to the asset by an application chain. The application chain includes one or more applications. When the application chain includes a plurality of applications, the application chain is specifically an invocation chain formed by a plurality of applications having an invocation relationship. The asset is a resource that can generate benefits. In some examples, the asset may be, for example, an application programming interface API for accessing a service or a credential. The credential may be specifically an access credential (access token). The access credential may be a credential of the API.

The asset access control method may be performed by an access control system. Specifically, the access control system obtains a first identity feature of an application chain, where the first identity feature of the application chain comes from logic of one or more applications in the application chain; and when the first identity feature of the application chain matches a second identity feature that is of the application chain and that is recorded in an application feature library, allows the application chain to access an asset.

The access control system performs identity identification by using an identity feature of the logic of the one or more applications in the application chain, instead of an external cryptographic feature such as a password, a key, or a certificate. Therefore, an asset security risk caused by spoofing or tampering of an application can be avoided, and asset security is ensured.

In some possible implementations, the first identity feature of the application chain may come from logic of all applications in the application chain. In this way, when all applications in the application chain are not tampered with, the first identity feature of the application chain can pass identity identification, and the access control system allows the application chain to access an asset, thereby ensuring asset security. In other words, the access control system can ensure that all applications in the application chain that can access the asset are untampered applications.

In some possible implementations, the logic of the application includes static logic or dynamic logic. The static logic refers to logic when the application is not executed, for example, may be logic of each function module of the application, including any one or more of logic of an input/output module of the application, logic of an interface invoking module, logic of a command execution module, or logic of a resource scheduling module. The dynamic logic refers to logic when the application is executed, for example, may be behavior logic when each function module of the application performs an operation, including logic of performing an input/output operation by the input/output module, logic of performing an interface invoking operation by the interface invoking module, logic of executing a command by the command execution module, or logic of scheduling a resource by the resource scheduling module.

Logic of different applications, such as static logic and dynamic logic, is different. Therefore, it is difficult to spoof an application, thereby preventing another application from spoofing a current application to access the asset, and ensuring asset security. In addition, when an application is tampered with, logic of the application such as static logic or dynamic logic changes, and the access control system performs identity identification by using an identity feature from the logic of the application, so that a case in which the application is tampered with can be effectively identified, thereby avoiding a security risk caused by access of the tampered application to the asset, and further ensuring asset security.

In some possible implementations, the access control system may perform feature extraction on the application chain, to obtain the first identity feature of the application chain. Specifically, in one operation process of the application chain, before the application chain accesses the asset for the first time, feature extraction is performed on the application chain, to obtain the first identity feature of the application chain. Before the operation ends and before the application chain accesses the asset again, an access control apparatus may directly obtain the first identity feature obtained by performing feature extraction during the first access. In this way, a quantity of times of feature extraction can be reduced, and calculation overheads can be reduced.

In some possible implementations, the access control system may perform feature extraction on the application chain each time before the application chain accesses the asset, to obtain the first identity feature of the application chain. In other words, the access control system performs feature extraction on the application chain in real time, to obtain the first identity feature of the application chain. In this way, the first identity feature obtained by the access control system can truly represent an identity of the application chain at this time, thereby avoiding a security risk caused by accessing an asset or an asset of a target attribute by still using the original identity feature when the application chain is tampered with or infected with a virus.

In some possible implementations, the application chain may include a plurality of branches, for example, include a plurality of branches for accessing the asset. The access control system may trigger an identity identification procedure when the application chain is executed to a branch for accessing the asset of the target attribute, thereby reducing intrusion to the application chain.

Specifically, when an attribute of the asset that the application chain requests to access is the target attribute, the first identity feature of the application chain is obtained. The asset of the target attribute may be a manually marked asset, for example, a manually marked high-value asset or a manually marked high-risk asset. In some embodiments, the asset of the target attribute may alternatively be an asset recommended by the system for recording.

According to the method, identity identification is triggered on a key path of the application chain, and access control is performed based on an identity identification result. In this way, maximum security benefits are obtained by minimizing system overheads, and impact of access control on the application chain is minimized.

In some possible implementations, the access control system may further filter the identity feature. For example, a corresponding Bloom vector is obtained by using a Bloom filter, and whether the first identity feature matches the second identity feature is determined based on the Bloom vector. Specifically, when a distance between a first Bloom vector corresponding to the first identity feature and a second Bloom vector corresponding to the second identity feature of the application chain is less than a preset distance, the first identity feature of the application chain matches the second identity feature that is of the application chain and that is recorded in the application feature library.

This method can improve efficiency of identity identification by converting identity features into Bloom vectors and determining whether the identity features match by using the vectors. In addition, security can be further improved by converting the identity features into Bloom vectors, for example, mixing identity features of a whitelist application together to form an unrecoverable string of 0 and 1.

In some possible implementations, the access control system may compare the first identity feature of the application chain with the second identity feature that is of the application chain and that is recorded in a local or remote application feature library. The access control system locally compares the first identity feature of the application chain with the second identity feature that is of the application chain and that is recorded in the local application feature library, so that dependency on a management side can be reduced. The remote application feature library can be updated in a timely manner. Therefore, the access control system has high accuracy when comparing the first identity feature of the application chain with the second identity feature that is of the application chain and that is recorded in the remote application feature library.

In some possible implementations, a locally deployed application may change, for example, an application is added, or the deployed application is modified. Based on this, the access control system may further update the local application feature library based on the remote application feature library.

In this way, the access control system may perform identity feature comparison based on the updated application feature library, so as to ensure accuracy of a comparison result and further ensure accuracy of identity identification.

In some possible implementations, the identity feature comparison process may be further performed remotely. Specifically, the access control system not only includes a local worker node, but also may include a remote management node. The access control system (which is specifically the worker node) may further send the first identity feature of the application chain to the management node, so that the management node compares the first identity feature of the application chain with the second identity feature that is of the application chain and that is recorded in a remote application feature library.

In some possible implementations, the asset includes any one or more of a local credential, a remote credential, or an application programming interface for accessing a target service. Access control is performed on the local credential, the remote credential, or the application programming interface for accessing the target service to prevent a security risk caused by asset leakage and ensure asset security.

In some possible implementations, the identity feature includes a fingerprint or a behavioral feature. Different applications have different fingerprints or behavioral features. A fingerprint or a behavioral feature of an application is difficult to be spoofed by another application. Therefore, identity identification based on the fingerprint or the behavioral feature has high reliability. Therefore, access control based on an identity identification result of the fingerprint or the behavioral feature can effectively ensure asset security.

In some possible implementations, the method is performed by a worker node on which the application chain is deployed in the access control system. In this way, a further operation can be directly blocked locally for an application that is not allowed to be accessed, so as to avoid sending an access request to a node on which an asset is deployed, thereby avoiding unnecessary resource consumption and saving resources.

In some possible implementations, the method is performed by a worker node on which the asset is deployed in the access control system. In this way, access control can be performed on the asset on a node side on which the asset is deployed, thereby ensuring asset security.

According to a second aspect, an embodiment of this application provides an access control system. The system includes an access control node. The access control node is configured to:
obtain a first identity feature of an application chain, where the identity feature of the application chain comes from logic of one or more applications in the application chain; and
when the first identity feature of the application chain matches a second identity feature that is of the application chain and that is recorded in an application feature library, allow the application chain to access an asset.

In some possible implementations, the logic of the application includes:
logic of an input/output module of the application or logic of performing an input/output operation by the input/output module;
logic of an interface invoking module of the application or logic of performing an interface invoking operation by the interface invoking module;
logic of a command execution module of the application or logic of executing a command by the command execution module; or
logic of a resource scheduling module of the application or logic of scheduling a resource by the resource scheduling module.

In some possible implementations, the access control node is specifically configured to:
perform feature extraction on the application chain to obtain the first identity feature of the application chain.

In some possible implementations, the access control node is specifically configured to:
perform feature extraction on the application chain each time before the application chain accesses the asset.

In some possible implementations, the access control node is specifically configured to:
obtain the first identity feature of the application chain when an attribute of the asset that the application chain requests to access is a target attribute.

In some possible implementations, when a distance between a first Bloom vector corresponding to the first identity feature of the application chain and a second Bloom vector corresponding to the second identity feature of the application chain is less than a preset distance, the first identity feature of the application chain matches the second identity feature that is of the application chain and that is recorded in the application feature library.

In some possible implementations, the access control node is further configured to:
compare the first identity feature of the application chain with the second identity feature that is of the application chain and that is recorded in a local or remote application feature library.

In some possible implementations, the access control node is further configured to:
update the local application feature library based on the remote application feature library.

In some possible implementations, the system further includes a management node.

The access control node is further configured to send the first identity feature of the application chain to the management node.

The management node is configured to compare the first identity feature of the application chain with the second identity feature that is of the application chain and that is recorded in the remote application feature library.

In some possible implementations, the asset includes any one or more of a local credential, a remote credential, or an application programming interface for accessing a target service.

In some possible implementations, the identity feature includes a fingerprint or a behavioral feature.

In some possible implementations, the access control node is a worker node on which the application chain is deployed.

In some possible implementations, the access control node is a worker node on which the asset is deployed.

According to a third aspect, an embodiment of this application provides an access control apparatus. The apparatus includes:
an obtaining module, configured to obtain a first identity feature of an application chain, where the identity feature of the application chain comes from logic of one or more applications in the application chain; and
a control module, configured to: when the first identity feature of the application chain matches a second identity feature that is of the application chain and that is recorded in an application feature library, allow the application chain to access an asset.

In some possible implementations, the logic of the application includes:
logic of an input/output module of the application or logic of performing an input/output operation by the input/output module;
logic of an interface invoking module of the application or logic of performing an interface invoking operation by the interface invoking module;
logic of a command execution module of the application or logic of executing a command by the command execution module; or
logic of a resource scheduling module of the application or logic of scheduling a resource by the resource scheduling module.

In some possible implementations, the obtaining module is specifically configured to:
perform feature extraction on the application chain to obtain the first identity feature of the application chain.

In some possible implementations, the obtaining module is specifically configured to:
perform feature extraction on the application chain each time before the application chain accesses the asset.

In some possible implementations, the obtaining module is specifically configured to:
obtain the first identity feature of the application chain when an attribute of the asset that the application chain requests to access is a target attribute.

In some possible implementations, when a distance between a first Bloom vector corresponding to the first identity feature of the application chain and a second Bloom vector corresponding to the second identity feature of the application chain is less than a preset distance, the first identity feature of the application chain matches the second identity feature that is of the application chain and that is recorded in the application feature library.

In some possible implementations, the apparatus further includes:
a comparison module, configured to compare the first identity feature of the application chain with the second identity feature that is of the application chain and that is recorded in a local or remote application feature library.

In some possible implementations, the apparatus further includes:
an update module, configured to update the local application feature library based on the remote application feature library.

In some possible implementations, the apparatus further includes:
a sending module, configured to send the first identity feature of the application chain to a management node, so that the management node compares the first identity feature of the application chain with the second identity feature that is of the application chain and that is recorded in a remote application feature library.

In some possible implementations, the asset includes any one or more of a local credential, a remote credential, or an application programming interface for accessing a target service.

In some possible implementations, the identity feature includes a fingerprint or a behavioral feature.

In some possible implementations, the apparatus and the application chain are deployed on a same worker node.

In some possible implementations, the apparatus and the asset are deployed on a same worker node.

According to a fourth aspect, an embodiment of this application provides a device. The device is configured to implement a function of the access control node in the access control system according to the second aspect or any one of the implementations of the second aspect.

According to a fifth aspect, an embodiment of this application provides a device. The device includes a processor and a memory. The processor and the memory communicate with each other. The processor is configured to execute instructions stored in the memory, so that the device is enabled to perform the asset access control method according to the first aspect or any one of the implementations of the first aspect.

According to a sixth aspect, this application provides a computer-readable storage medium, where the computer-readable storage medium stores instructions. The instructions instruct a device to perform the asset access control method according to the first aspect or any one of the implementations of the first aspect.

According to a seventh aspect, this application provides a computer program product including instructions. When the computer program product runs on a device, the device is enabled to perform the asset access control method according to the first aspect or any one of the implementations of the first aspect.

In this application, on the basis of the implementations according to the foregoing aspects, the implementations may be further combined to provide more implementations.

### BRIEF DESCRIPTION OF DRAWINGS

To describe the technical methods in embodiments of this application more clearly, the following briefly describes the accompanying drawings used in describing embodiments.
FIG. 1 is a diagram of a system architecture of an access control system according to an embodiment of this application;
FIG. 2 is a schematic diagram of asset access control according to an embodiment of this application;
FIG. 3A is a schematic diagram of an architecture of an access control system according to an embodiment of this application;
FIG. 3B is a schematic diagram of an architecture of an access control system according to an embodiment of this application;
FIG. 4 is a flowchart of an asset access control method according to an embodiment of this application;
FIG. 5 is a schematic diagram of access control on an asset according to an embodiment of this application;
FIG. 6 is a schematic flowchart of an asset access control method according to an embodiment of this application;
FIG. 7 is a principle diagram of a Bloom filter according to an embodiment of this application;
FIG. 8 is a schematic flowchart of an asset access control method according to an embodiment of this application;
FIG. 9 is a schematic diagram of a structure of an access control apparatus according to an embodiment of this application; and
FIG. 10 is a schematic diagram of a structure of a device according to an embodiment of this application.

### DESCRIPTION OF EMBODIMENTS

Terms "first" and "second" in embodiments of this application are merely intended for description, and shall not be understood as an indication or implication of relative importance or implicit indication of a quantity of indicated technical features. Therefore, a feature limited by "first" or "second" may explicitly or implicitly include one or more features.

First, some technical terms in embodiments of this application are described.

An application is a program that runs as an independent entity. In some possible implementations, the application may be a microservice in a system based on a microservice framework. An application can also invoke another application to form an application chain. The application chain may include one or more applications. A plurality of applications are a plurality of applications that have an invocation relationship. For example, if an application A invokes an application B, and an application B invokes an application C, the application A, the application B, and the application C may form an application chain.

An asset is a resource that can generate benefits. In some embodiments, the asset may be, for example, an application programming interface (application programming interface, API) for accessing a service or a credential. The credential may be specifically an access credential (access token). The access credential may be a credential of the API. The credential can be used for authentication so that the API can be used to access the corresponding service after authentication is successful. The credential may be any one or more of a session identifier (session ID), a secure shell protocol (secure shell, SSH) login key, a JSON web token (JSON web token, JWT), a one-time password, or the like.

In actual applications, the application chain can be used as a whole to access an asset. To ensure asset security, access control is often required for the application chain to access the asset. Currently, in the industry, identity identification is mainly performed on an application chain based on a cryptographic feature. For example, identity identification is performed on an application chain based on an authentication factor such as a password, a key, or a certificate, and then access control is performed based on an identity identification result. However, any application that obtains an authentication factor of a target application may spoof the target application to access assets. This brings great challenges to asset security.

In view of this, an embodiment of this application provides an asset access control method. The method may be performed by an access control system. Specifically, the access control system obtains a first identity feature of an application chain, where the first identity feature of the application chain comes from logic of one or more applications in the application chain, for example, from logic of all applications in the application chain; and when the first identity feature of the application chain matches a second identity feature that is of the application chain and that is recorded in an application feature library, allow the application chain to access the asset.

The access control system performs identity identification by using an identity feature of the logic of the one or more applications in the application chain, instead of an external cryptographic feature such as a password, a key, or a certificate. Therefore, an asset security risk caused by spoofing or tampering of an application can be avoided, and asset security is ensured.

When the first identity feature of the application chain comes from the logic of all applications in the application chain, and all applications in the application chain are not tampered with, the first identity feature of the application chain can pass identity identification, and the access control system allows the application chain to access the asset, thereby ensuring asset security. In other words, the access control system can ensure that all applications in the application chain that can access the asset are untampered applications.

Further, the access control system may perform feature extraction on the application chain each time before the application chain accesses the asset, to obtain the first identity feature of the application chain, and perform identity identification based on the internal first identity feature. In this way, a security risk caused by continuing to perform an operation by still using an original identity feature when ontological behavior logic of the application has changed because the application is infected with a virus or tampered with can be avoided, thereby further ensuring asset security.

To make the technical solutions of this application clearer and easier to understand, the following describes the access control system provided in embodiments of this application with reference to the accompanying drawings.

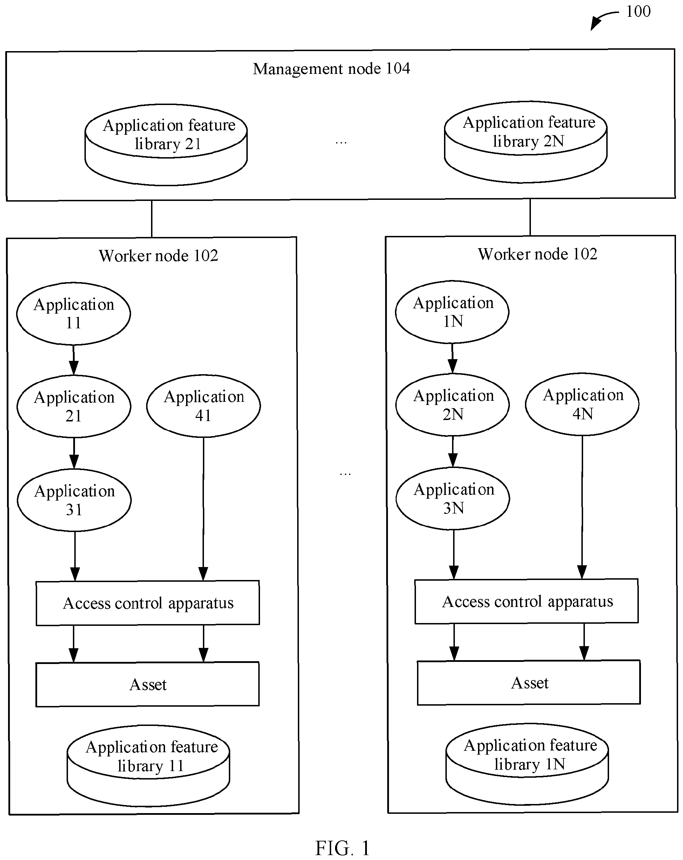

Refer to a diagram of a system architecture of an access control system shown in FIG. 1. As shown in FIG. 1, an access control system 100 includes at least one worker node 102. Each worker node 102 is deployed with one or more applications. The one or more applications may form an invocation chain. The application chain may be an invocation chain formed by a plurality of applications having an invocation relationship, or may be a single application.

An application chain on the worker node 102 may be used as a whole to access an asset, for example, access an API or access a credential. The asset may be a local asset or a remote asset. The local asset is an asset that is deployed on the same worker node 102 as the application chain, and may include, for example, a local credential, or an API for accessing a local target service. The remote asset is an asset that is not deployed on the same worker node 102 as the application chain, for example, an asset deployed on another worker node 102. The remote asset may specifically include a remote credential or an API for accessing a remote target service.

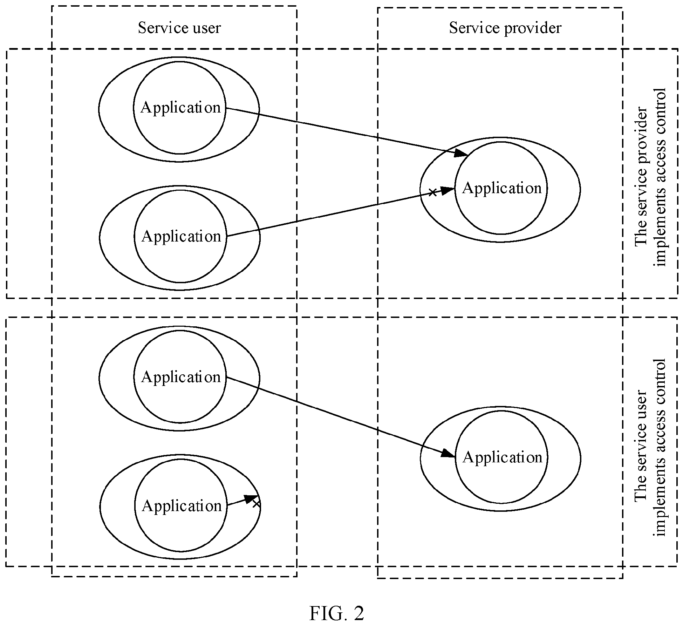

Refer to FIG. 2. The worker node 102 on which the application chain is deployed or the worker node 102 on which the asset is deployed may be used as an access control node to perform the asset access control method. The asset access control method is implemented by the worker node 102 (when the asset is an API that uses the target service, the worker node 102 may also be referred to as a service using node) on which the application chain is deployed, instead of the worker node 102 (when the asset is an API that uses the target service, the worker node 102 may also be referred to as a service providing node) on which the asset is deployed, so that control can be performed from the service using node, and a further operation of an application that is not allowed to access the asset is directly blocked locally, to avoid sending an access request to the service providing node. In this way, unnecessary resource consumption is avoided and resources are reduced.

For ease of description, the following uses an example in which the worker node 102 on which the application chain is deployed is used as the access control node to implement the access control method.

Specifically, an access control apparatus is deployed on the access control node (for example, the worker node 102 on which the application chain is deployed). Before the application chain accesses the asset, the access control apparatus obtains a first identity feature of the application chain, where the first identity feature of the application chain comes from logic of one or more applications in the application chain, specifically, from logic of some or all applications in the application chain; and when the first identity feature of the application chain matches a second identity feature that is of the application chain and that is recorded in an application feature library, allow the application chain to access the asset.

The access control apparatus may perform feature extraction on the application chain each time before the application chain accesses the asset, to obtain the first identity feature of the application chain, then perform identity identification based on the first identity feature extracted in real time. For example, the first identity feature extracted in real time is compared with the second identity feature, and when the first identity feature obtained in real time matches the second identity feature, the application chain is allowed to access the asset. In this way, real-time prevention and control can be implemented, and a security risk caused by still accessing the asset by using an original identity feature when some or all applications in the application chain change is avoided, thereby further ensuring asset security.

Further, the access control apparatus may further start identity identification when an attribute of the asset that the application chain requests to access is a target attribute. The asset of the target attribute may be a manually marked asset, for example, may be a manually marked high-value asset, a manually marked high-risk asset, or the like. In some embodiments, the asset of the target attribute may alternatively be an asset recommended by the system for recording. When the attribute of the asset that the application chain requests to access is the target attribute, for example, a high value, the first identity feature of the application chain is obtained. When the first identity feature matches the second identity feature recorded in the application feature library, the application chain is allowed to access the asset. Otherwise, the application chain is rejected to access the asset. In this way, security of a high-value and high-risk asset is ensured, and intrusion to an application is reduced. In addition, when the application chain accesses the asset of the target attribute, access control is performed by using the foregoing access control method instead of performing access control on the entire application chain, so that maximum security benefits are obtained by minimizing system overheads, and impact of access control on the application chain is minimized.

In some possible implementations, the access control system 100 further includes a management node 104. The management node 104 may maintain a remote application feature library. As shown in FIG. 1, N (where N is a positive integer) worker nodes 102 separately maintain local application feature libraries, for example, an application feature library 11 to an application feature library 1N, and the management node 104 maintains remote application feature libraries, for example, an application feature library 21 to an application feature library 2N.

The management node 104 may perform feature extraction on an application deployed on each worker node 102 in an initialization phase, to obtain an identity feature of the application deployed on each worker node 102. The identity feature comes from logic of the application. The logic of the application may be specifically logic of an input/output module of the application or logic of performing an input/output operation by the input/output module, logic of an interface invoking module of the application or logic of performing an interface invoking operation by the interface invoking module, logic of a command execution module of the application or logic of executing a command by the command execution module, or logic of a resource scheduling module of the application or logic of scheduling a resource by the resource scheduling module. Correspondingly, the identity feature may be, for example, a static fingerprint or a dynamic behavioral feature (a behavioral feature during application running).

When performing feature extraction on the application deployed on the worker node 102, the management node 104 may perform feature extraction on a whitelist application deployed on the worker node 102. The whitelist application is an application added to a whitelist. The management node 104 performs feature extraction on a whitelist application on each worker node 102, to obtain a corresponding identity feature, and forms, based on the identity feature, an application feature library corresponding to each worker node 102, where the application feature library is a remote application feature library. The remote application feature library records the second identity feature of the application chain.

Further, the management node 104 may maintain the remote application feature library. Specifically, when the application deployed on the worker node 102 changes, for example, an application is added or the deployed application is modified, the worker node 102 may report application change information, for example, information such as a name, a directory, and a source of the added application, and the management node 104 determines, based on the application change information, whether to add the added application to the whitelist. If yes, the identity feature of the added application is extracted, and the remote application feature library corresponding to the worker node 102 is updated.

In some possible implementations, the worker node 102 (for example, the access control apparatus on the worker node 102) may update the local application feature library based on the remote application feature library. In this way, an identity feature matching process may be completed locally, without being reported to the management node 104. Therefore, dependency on the management node 104 can be reduced. In addition, the worker node 102 (for example, the access control apparatus on the worker node 102) updates the local application feature library based on the remote application feature library, and compares the first identity feature with the second identity feature recorded in the updated local application feature library, so that comparison accuracy can be improved.

The worker node 102 (for example, the access control apparatus on the worker node 102) updates the local application feature library in a plurality of implementations. For example, the worker node 102 may update the local application feature library in real time when the remote application feature library is updated. For another example, the worker node 102 may update the local application feature library based on a preset period.

It should be noted that, when the worker node 102 (for example, the access control apparatus on the worker node 102) locally compares the first identity feature with the second identity feature recorded in the local application feature library, if the first identity feature matches the second identity feature recorded in the local application feature library, it indicates that the application in the application chain is in the whitelist, and the worker node 102 (for example, the access control apparatus) allows the application chain to access the asset. If the first identity feature does not match the second identity feature recorded in the local application feature library, the worker node 102 may further report attribute information of the application chain, for example, a process identifier of the application chain, to the management node 104.

The management node 104 determines a risk of the application in the application chain based on the process identifier, and determines, based on the risk, whether to add the application in the application chain to the whitelist. If yes, feature extraction is performed on the application added to the whitelist, and the remote application feature library is updated. The worker node 102 may update the local application feature library based on the remote application feature library. Then, the worker node 102 (for example, the access control apparatus on the worker node 102) compares the first identity feature with the second identity feature recorded in the local application feature library again. If the first identity feature still does not match the second identity feature, it indicates that at least one application in the application chain is not in the whitelist, or at least one application is tampered with although the application is in the whitelist, and the worker node 102 (for example, the access control apparatus) forbids the application chain to access the asset. It can be learned that the access control system 100 may implement a loosely coupled architecture of centralized application management and distributed management and control, and has high availability and reliability as a whole.

In some possible implementations, the worker node 102 (for example, the access control apparatus on the worker node 102) may alternatively obtain the second identity feature of the application chain from the remote application feature library, and then locally compare the first identity feature with the second identity feature, to determine whether the first identity feature matches the second identity feature.

In some possible implementations, the worker node 102 (for example, the access control apparatus on the worker node 102) may alternatively send the first identity feature to the management node 104. The management node 104 remotely compares the first identity feature with the second identity feature, and then sends a comparison result to the worker node 102. The comparison result is used to represent whether the first identity feature matches the second identity feature.

Considering comparison efficiency, the worker node 102 (for example, the access control apparatus on the worker node 102) or the management node 104 may obtain a first Bloom vector corresponding to the first identity feature of the application chain and a second Bloom vector corresponding to the second identity feature of the application chain, and determine a distance between the first Bloom vector and the second Bloom vector, so as to compare the first identity feature and the second identity feature. When the distance between the first Bloom vector and the second Bloom vector is less than a preset distance, it indicates that the first identity feature of the application chain matches the second identity feature that is of the application chain and that is recorded in the application feature library. Otherwise, it indicates that the first identity feature of the application chain does not match the second identity feature that is of the application chain and that is recorded in the application feature library.

In the embodiment shown in FIG. 1, the access control apparatus may be deployed in the local worker node 102 in a form of a computer program such as a script or a plug-in. The application chain executes the script or the plug-in before accessing the asset, to implement the asset access control method. The worker node 102 and the management node 104 in the access control system 100 may be physical nodes, or may be logical nodes virtualized from physical nodes. One physical node may correspond to one physical machine, for example, correspond to one physical server or one terminal, and one logical node may correspond to one virtual machine. In some embodiments, one logical node may also correspond to one container.

The following describes a deployment manner of the access control system 100 in detail with reference to the accompanying drawings.

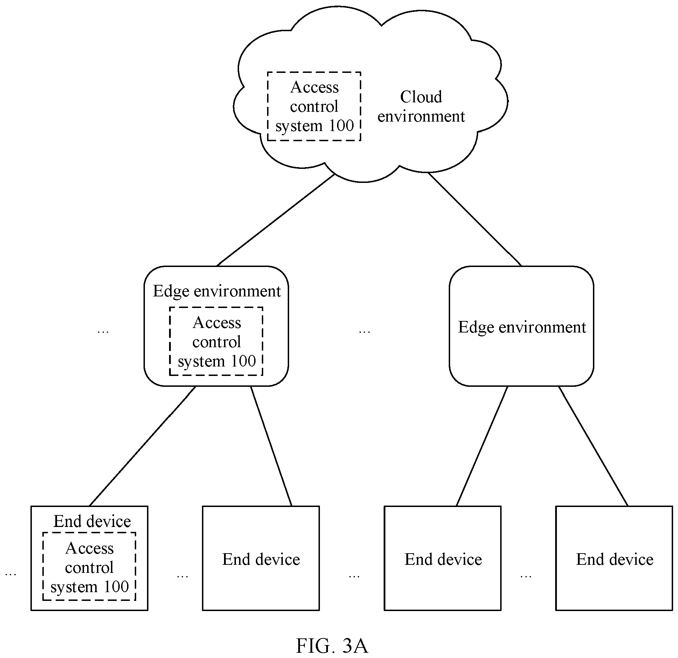

As shown in FIG. 3A, parts of the access control system 100 may be centrally deployed in a cloud environment, and specifically, deployed on one or more computing devices (for example, central servers) in the cloud environment. The parts of the access control system 100 may also be centrally deployed in an edge environment, and specifically, deployed on one or more computing devices (edge computing devices) in the edge environment. The edge computing device may be a server, a computing box, or the like. The cloud environment indicates a central computing device cluster owned by a cloud service provider and configured to provide computation, storage, and communication resources. The edge environment indicates an edge computing device cluster that is geographically close to an end device (namely, an end-side device) and that is configured to provide computation, storage, and communication resources. For example, the access control system 100 may be deployed in a public cloud, and is configured to perform identity identification on application chains formed by services in various service-oriented architecture (Service-Oriented Architecture, SOA) systems, and perform access control on accessing the asset by the application chain based on an identity identification result.

In some possible implementations, the parts of the access control system 100 may be further centrally deployed on the end device. The end device includes but is not limited to a user terminal such as a desktop computer, a notebook computer, a smartphone, or the like.

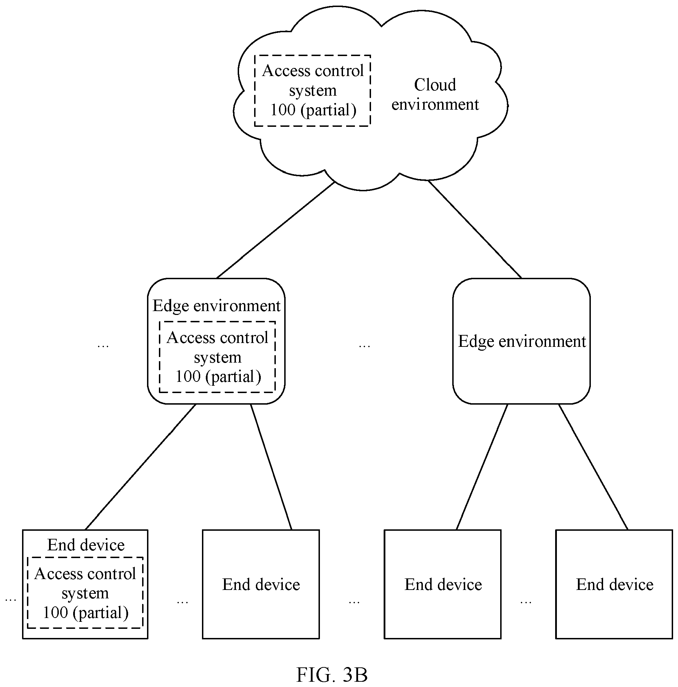

As shown in FIG. 3B, the parts of the access control system 100 may also be deployed in different environments in a distributed manner. For example, a part of the access control system 100 may be separately deployed in three environments or any two of the three environments: the cloud environment, the edge environment, and the end device.

FIG. 3A and FIG. 3B merely show some deployment manners of the access control system 100. In another possible implementation of this embodiment of this application, the access control system 100 may be deployed in another manner. Details are not described herein.

With reference to the accompanying drawings, the following describes the asset access control method provided in embodiments of this application from a perspective of the access control system 100 (specifically, the access control apparatus in the access control system 100).

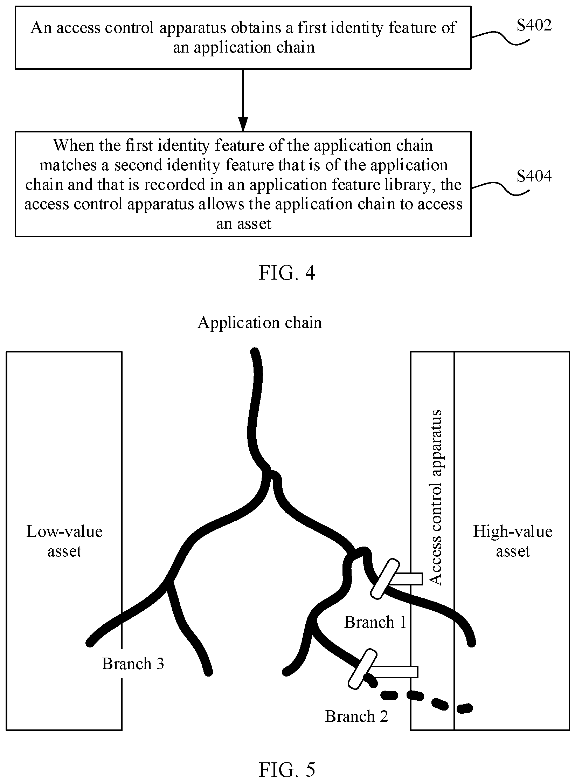

Refer to a flowchart of the access control method shown in FIG. 4. The method includes the following steps.

S402: The access control apparatus obtains a first identity feature of an application chain.

The application chain includes one or more applications that have an invocation relationship. An application may include a plurality of branches, and each branch represents an operation. A management and control embedding point may be preset for a branch for accessing the asset in the application chain. When an application in the application chain is executed to the branch for accessing the asset, especially a branch for accessing an asset of a target attribute, an identity identification procedure of the application chain may be triggered by using the management and control embedding point.

The management and control embedding point may be specifically implemented by using a hook (hook). A hook event may be preset in the application chain. The hook event includes an event of accessing the asset. Further, the hook event may be an event of accessing the asset of the target attribute, such as an event of accessing a high-value asset or an event of accessing a high-risk asset. When the application chain is executed to the management and control embedding point, the management and control embedding point may send attribute information of the application chain, such as a process identifier (for example, a process ID) of the application chain, to the access control apparatus. The access control apparatus obtains the first identity feature of the corresponding application chain based on the process identifier.

The first identity feature comes from logic of one or more applications in the application chain. There are two types of logic of the application: static and dynamic. The static logic includes any one or more of logic of an input/output module, logic of an interface invoking module, logic of a command execution module, or logic of a resource scheduling module of the application. The dynamic logic includes any one or more of logic of performing an input/output operation by the input/output module, logic of performing an interface invoking operation by the interface invoking module, logic of executing a command by the command execution module, or logic of scheduling a resource by the resource scheduling module.

The access control apparatus may perform feature extraction on the application chain, to obtain the first identity feature of the application chain, where the first identity feature may be used to perform identity identification on the application chain. Specifically, the access control apparatus may extract one or more of a fingerprint or a behavioral feature of the application chain, and use the fingerprint or the behavioral feature as the first identity feature of the application chain.

The fingerprint of the application chain is a static identity feature. The static logic of the application in the application chain may be carried in a binary file of the application, for example, an executable file in an exe format. The access control apparatus may perform static extraction on binary files, such as executable files in the exe format, of some or all applications in the application chain, to obtain the fingerprint of the application chain. The static extraction includes a hash function operation or a check operation based on a check algorithm. In some embodiments, the access control apparatus may calculate a binary file of each application in the application chain by using a message-digest algorithm 5 (Message-Digest Algorithm 5, MD5), to obtain an MD5 value. The MD5 value may be used as the fingerprint of the application chain.

The behavioral feature of the application chain is a dynamic identity feature. The dynamic logic of the application in the application chain may be carried in various behaviors of the application. The access control apparatus may dynamically capture behaviors of some or all applications in the application chain, to obtain the behavioral feature of the application chain. Specifically, in a clean monitoring environment, a function of the application in the application chain is run, and the access control apparatus captures various behaviors of some or all applications in the application chain and data related to the behaviors, so that a dynamic behavior relationship and a data dependency relationship of the application chain can be obtained. The access control apparatus may obtain the behavioral feature of the application chain based on the dynamic behavior relationship and the data dependency relationship. It should be noted that the access control apparatus may further compress the dynamic behavior relationship and the data dependency relationship, to simplify the behavior feature.

In some possible implementations, the access control apparatus may first perform feature extraction on the application chain before the application chain accesses the asset for the first time or accesses the asset of the target attribute for the first time in an operation process of the application chain, to obtain the first identity feature of the application chain. Before the operation ends, and before the application chain accesses the asset or the asset of the target attribute again, the access control apparatus may directly obtain the first identity feature obtained by performing feature extraction during the first access. In this way, a quantity of times of feature extraction can be reduced, and calculation overheads can be reduced.

In some other possible implementations, the access control apparatus may perform feature extraction on the application chain each time before the application chain accesses the asset or each time before the application chain accesses the asset of the target attribute, to obtain the first identity feature of the application chain. In other words, the access control apparatus performs feature extraction on the application chain in real time, to obtain the first identity feature of the application chain. In this way, the first identity feature obtained by the access control apparatus can truly represent an identity of the application chain at this time, thereby avoiding a security risk caused by accessing the asset or the asset of the target attribute by still using the original identity feature when the application chain is tampered with or infected with a virus.

The asset of the target attribute may be a manually marked asset, for example, a manually marked high-value asset, a manually marked high-risk asset, or the like. In some embodiments, the asset of the target attribute may alternatively be an asset recommended by the system for recording. The access control apparatus triggers an identity identification procedure when the asset of the target attribute is accessed. This can ensure security of the asset of the target attribute on one hand, and can reduce intrusion to the application chain on another hand.

S404: When the first identity feature of the application chain matches a second identity feature that is of the application chain and that is recorded in an application feature library, the access control apparatus allows the application chain to access the asset.

The application feature library records an identity feature of the application deployed on the worker node 102. In some embodiments, the application feature library records an identity feature of a whitelist application deployed on the worker node 102. The application deployed on the worker node 102 may include the application in the application chain. Therefore, the application feature library records an identity feature of the application chain. For ease of differentiation, in embodiments of this application, the identity feature recorded in the application feature library is referred to as the second identity feature.

The access control apparatus may determine, based on a similarity between the first identity feature and the second identity feature, whether the first identity feature matches the second identity feature. For example, the access control apparatus may locally determine the similarity between the first identity feature and the second identity feature that is in a local application feature library, so as to implement local identity feature comparison, or send the first identity feature to the management node 104, so that the management node 104 remotely determines the similarity between the first identity feature and the second identity feature that is in a remote application feature library, so as to implement remote identity feature comparison. In this way, identity identification of the application chain can be implemented.

When identity feature comparison is performed locally, the access control apparatus may further update the local application feature library based on the remote application feature library, so that comparison accuracy can be improved. It should be noted that, in some embodiments, the access control apparatus may alternatively obtain the second identity feature from the remote application feature library, and then locally compare the first identity feature with the second identity feature, to determine whether the first identity feature matches the second identity feature, so as to implement identity identification of the application chain.

The access control apparatus determines a corresponding access control policy based on an identity identification result. For example, when the first identity feature matches the second identity feature, the identity identification result is that identity identification succeeds, the application in the application chain is a whitelist application, and the access control apparatus determines that the access control policy is to allow access. When the first identity feature does not match the second identity feature, the identity identification result is that identity identification fails, the application chain includes a non-whitelist application, and the access control apparatus determines that the access control policy is to reject access.

For ease of understanding, this application further provides a specific example for description.

As shown in FIG. 5, the application chain includes a plurality of branches. The plurality of branches include three branches that access an asset, which are specifically a branch 1, a branch 2, and a branch 3. The branch 1 and the branch 2 are branches for accessing a high-value asset, and the branch 3 is a branch for accessing a low-value asset. A management and control embedding point is preset in the branch 1 and the branch 2. When the application chain is executed to the branch 1 or the branch 2, the management and control embedding point corresponding to the branch 1 or the branch 2 triggers an identity identification procedure for the application chain.

Specifically, the management and control embedding point transfers a process ID of the application chain to the access control apparatus. The access control apparatus performs feature extraction on the application chain based on the process ID of the application chain, to obtain the first identity feature of the application chain, for example, a first fingerprint and a first behavioral feature of the application chain. Then, the access control apparatus compares the first identity feature of the application chain with the second identity feature, for example, a second fingerprint and a second behavioral feature, recorded in the application feature library (for example, the local application feature library), obtains a corresponding access control policy based on a comparison result, returns the access control policy to the management and control embedding point, so as to control access to the asset by the application chain.

When the comparison result represents that the first identity feature matches the second identity feature, the access control policy obtained by the access control apparatus may be that the application chain is allowed to access the asset. When the comparison result represents that the first identity feature does not match the second identity feature, the access control policy obtained by the access control apparatus may be that the application chain is not allowed to access the asset.

In the example in FIG. 5, when the application chain is executed to the branch 1, the application chain is allowed to access the high-value asset. When the application chain is executed to the branch 2, the application chain is not allowed to access the high-value asset. When the application chain is executed to the branch 3, because an asset that the branch 3 requests to access is a low-value asset, the identity identification procedure is not triggered, and the application chain may directly access the low-value asset.

Based on the foregoing content, it can be learned that an embodiment of this application provides an asset access control method. In the method, the internal first identity feature of the application chain is obtained, identity identification is performed based on the internal first identity feature instead of an external cryptographic feature, and then access control is performed based on the foregoing identity identification result, so as to avoid an asset security risk caused by spoofing or tampering of an application, and ensure asset security.

The following separately describes the asset access control methods provided in embodiments of this application by using examples in which the application chain accesses a local credential and a remote credential.

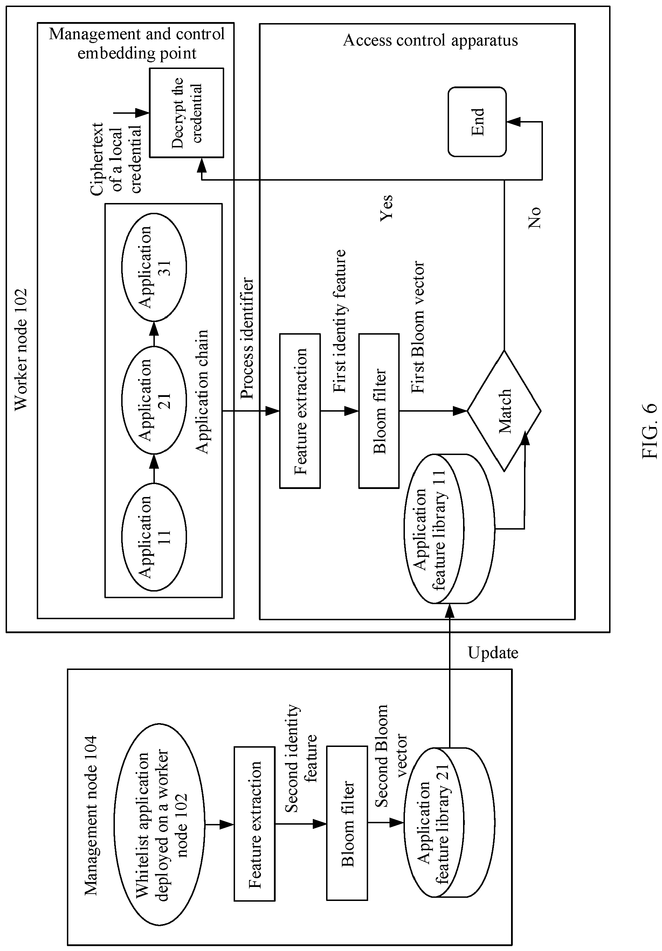

Refer to a schematic flowchart of an asset access control method shown in FIG. 6. The method specifically includes the following steps.

Step 1: The management node 104 performs feature extraction on a whitelist application on the worker node 102 to obtain a second identity feature of the whitelist application, and generates a remote application feature library based on the second identity feature.

Specifically, the management node 104 may store the second identity feature in the remote application feature library in a form of a file. In consideration of security, the management node 104 may perform encryption protection on the file into which the second identity feature is written. In some possible implementations, the management node 104 may alternatively input the second identity feature into a Bloom filter, to obtain a second Bloom vector corresponding to the second identity feature, and then store the second Bloom vector in the remote application feature library. Identity features such as fingerprints of the whitelist application are mixed together to form a string of 0 and 1 that cannot be restored. In this way, security can be improved, and feature comparison efficiency can be improved.

The following describes a principle of the Bloom filter with reference to the accompanying drawing.

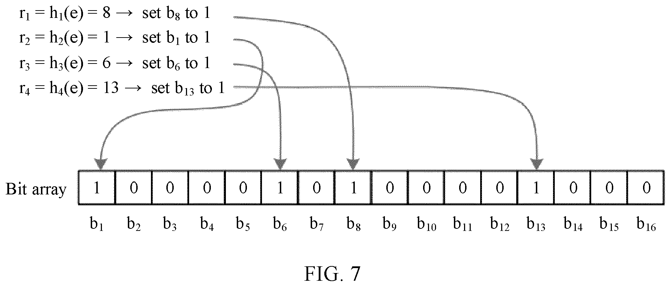

Refer to a principle diagram of a Bloom filter shown in FIG. 7. As shown in FIG. 7, the Bloom filter first initializes all bits in a Bloom vector (b1, b2, ..., bm) whose length is m bits to 0, and then applies k mutually independent shortcut HASH functions (h1, h2, ..., hk) whose return values are from 1 to m to a second identity feature of each input, for example, a fingerprint of each input, to obtain k return values (r1, r2, ..., rk), and then sets bits in the Bloom vector that are located at r1, r2, ..., and rk to 1, so as to obtain a Bloom vector corresponding to an identity feature.

Step 2: The access control apparatus on the worker node 102 updates a local application feature library based on the remote application feature library.

Step 3: When the application chain is executed to a branch that accesses the local credential, an embedded control point on the worker node 102 sends a process ID of the application chain.

Step 4: The access control apparatus on the worker node 102 obtains a first identity feature of the application chain based on the process ID.

Specifically, the access control apparatus on the worker node 102 searches, based on the process ID, for an application included in the application chain, and performs feature extraction on the application included in the application chain, to obtain the first identity feature of the application chain. The first identity feature of the application chain includes first identity features of some or all applications of the application chain, for example, fingerprints and behavioral features of some or all applications.

Step 5: The access control apparatus on the worker node 102 inputs the first identity feature into the Bloom filter, to obtain a first Bloom vector.

When the remote application feature library stores the second identity feature instead of the second Bloom vector corresponding to the second identity feature, the access control apparatus may not perform step 5.

Step 6: The access control apparatus on the worker node 102 determines whether the first identity feature matches the second identity feature recorded in the local application feature library, and if yes, performs step 7, or if no, ends the current process.

The access control apparatus on the worker node 102 may determine, by using a distance between the first Bloom vector and the second Bloom vector, whether the first identity feature matches the local second identity feature. When the distance between the first Bloom vector and the second Bloom vector is less than a preset distance, it indicates that the first identity feature matches the second identity feature. Otherwise, the first identity feature does not match the second identity feature.

In some implementations, the access control apparatus on the worker node 102 may directly determine a similarity between the first identity feature and the second identity feature, to determine whether the first identity feature matches the second identity feature.

Step 7: The management and control embedding point on the worker node 102 decrypts ciphertext of the local credential, to obtain the local credential.

In this embodiment of this application, whitelist management and control is performed on obtaining of the local credential in a plaintext form. The local credential of the plaintext cannot be obtained by tampering with any application chain that is not in the whitelist or an application chain in the whitelist. Therefore, security of the local credential is ensured.

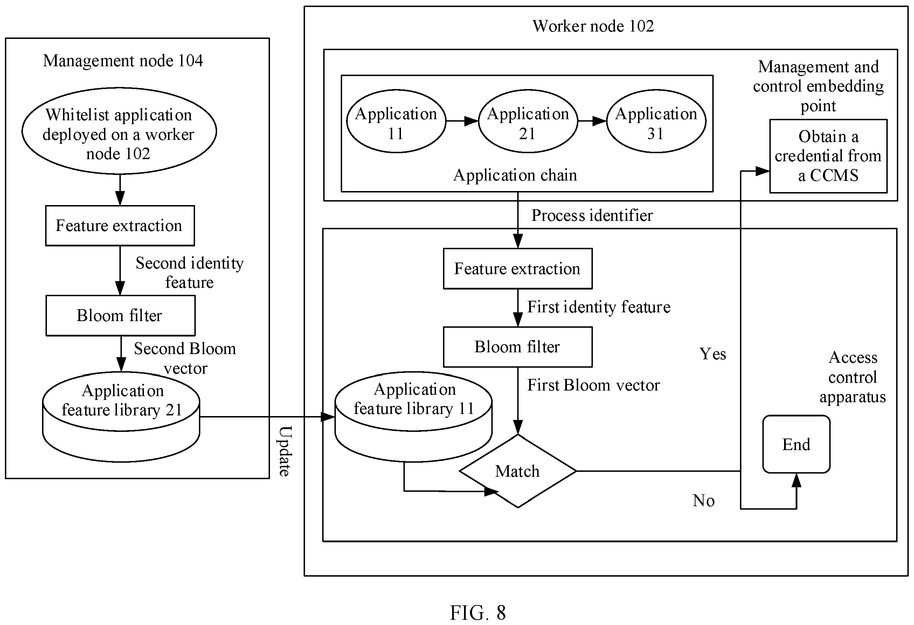

Next, refer to a schematic flowchart of an asset access control method shown in FIG. 8. The method specifically includes the following steps.

Step 1: The management node 104 performs feature extraction on a whitelist application on the worker node 102 to obtain a second identity feature of the whitelist application, and generates a remote application feature library based on the second identity feature.

Step 2: The access control apparatus on the worker node 102 updates a local application feature library based on the remote application feature library.

Step 3: When the application chain is executed to a branch that accesses the remote credential, an embedded control point on the worker node 102 sends a process ID of the application chain.

Step 4: The access control apparatus on the worker node 102 obtains a first identity feature of the application chain based on the process ID.

Step 5: The access control apparatus on the worker node 102 inputs the first identity feature into the Bloom filter, to obtain a first Bloom vector.

When the remote application feature library stores the second identity feature instead of a second Bloom vector corresponding to the second identity feature, the access control apparatus may not perform step 5.

Step 6: The access control apparatus on the worker node 102 determines whether the first identity feature matches the second identity feature recorded in the local application feature library, and if yes, performs step 7, or if no, ends the current process.

Step 7: The management and control embedding point on the worker node 102 obtains the remote credential from a cloud credential management service.

The cloud credential management service (cloud credential management service, CCMS) can host credentials remotely. When the first identity feature matches the second identity feature, the management and control embedding point may obtain the remote credential, for example, may obtain the remote credential through a representational state transfer (representational state transfer, REST) style, namely, a RESTful-style application programming interface (application programming interface, API).

With reference to FIG. 1 to FIG. 8, the foregoing describes in detail the access control system and the asset access control method provided in embodiments of this application. The following describes the apparatus and the device provided in embodiments of this application.

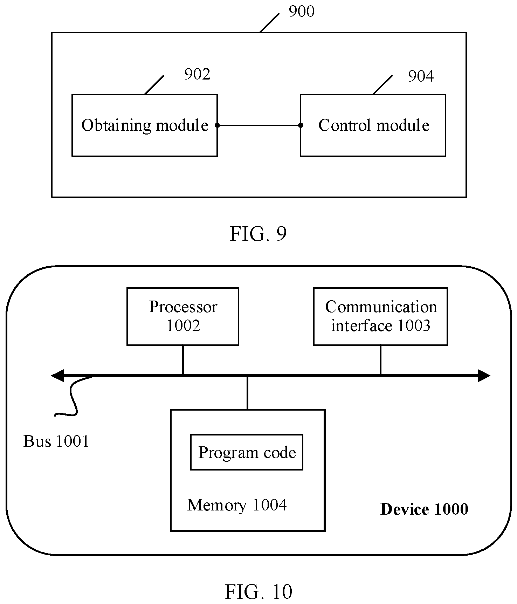

Refer to a schematic diagram of a structure of an access control apparatus shown in FIG. 9. The access control apparatus 900 includes:
an obtaining module 902, configured to obtain a first identity feature of an application chain, where the identity feature of the application chain comes from logic of one or more applications in the application chain; and
a control module 904, configured to: when the first identity feature of the application chain matches a second identity feature that is of the application chain and that is recorded in an application feature library, allow the application chain to access an asset.

In some possible implementations, the logic of the application includes:
logic of an input/output module of the application or logic of performing an input/output operation by the input/output module;
logic of an interface invoking module of the application or logic of performing an interface invoking operation by the interface invoking module;
logic of a command execution module of the application or logic of executing a command by the command execution module; or
logic of a resource scheduling module of the application or logic of scheduling a resource by the resource scheduling module.

In some possible implementations, the obtaining module 902 is specifically configured to:
perform feature extraction on the application chain to obtain the first identity feature of the application chain.

In some possible implementations, the obtaining module 902 is specifically configured to:
perform feature extraction on the application chain each time before the application chain accesses the asset.

In some possible implementations, the obtaining module 902 is specifically configured to:
obtain the first identity feature of the application chain when an attribute of the asset that the application chain requests to access is a target attribute.

In some possible implementations, when a distance between a first Bloom vector corresponding to the first identity feature of the application chain and a second Bloom vector corresponding to the second identity feature of the application chain is less than a preset distance, the first identity feature of the application chain matches the second identity feature that is of the application chain and that is recorded in the application feature library.

In some possible implementations, the apparatus 900 further includes:
a comparison module, configured to compare the first identity feature of the application chain with the second identity feature that is of the application chain and that is recorded in a local or remote application feature library.

In some possible implementations, the apparatus 900 further includes:
an update module, configured to update the local application feature library based on the remote application feature library.

In some possible implementations, the apparatus 900 further includes:
a sending module, configured to send the first identity feature of the application chain to a management node, so that the management node compares the first identity feature of the application chain with the second identity feature that is of the application chain and that is recorded in the remote application feature library.

In some possible implementations, the asset includes any one or more of a local credential, a remote credential, or an application programming interface for accessing a target service.

In some possible implementations, the identity feature includes a fingerprint or a behavioral feature.

In some possible implementations, the apparatus 900 and the application chain are deployed on a same worker node.

The access control apparatus provided in embodiments of this application may correspondingly perform the methods described in embodiments of this application, and the foregoing and other operations and/or functions of the modules/units of the access control apparatus are separately used to implement corresponding procedures of the methods in embodiments shown in FIG. 4 to FIG. 8. For brevity, details are not described herein again.

An embodiment of this application further provides a device. The device may be a computing device such as a terminal or a server. The device may be a single device, or may be a cluster formed by a plurality of devices. For ease of description, a single device is used as an example for description in this embodiment of this application. The device may be specifically configured to implement a function of the access control apparatus 900 shown in FIG. 9. The following describes the device provided in embodiments of this application from a perspective of hardware materialization.

FIG. 10 is a schematic diagram of structure of a device 1000. As shown in FIG. 10, the device 1000 includes a bus 1001, a processor 1002, a communication interface 1003, and a memory 1004. The processor 1002, the memory 1004, and the communication interface 1003 communicate with each other through the bus 1001.

The bus 1001 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 10, but this does not indicate that there is only one bus or only one type of bus.

The processor 1002 may be any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 1003 is an input/output (input/output, I/O) device. The communication interface 1003 is used to communicate with the outside. Specifically, the communication interface 1003 may obtain a second identity feature recorded in a remote application feature library, to update a local application feature library, or report application change information to the management node 104, so that the management node 104 determines, based on the application change information, whether to add a corresponding application to a whitelist, or the like.

The memory 1004 may include a volatile memory (volatile memory), for example, a random access memory (random access memory, RAM). The memory 1004 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1004 stores executable program code. The processor 1002 executes the executable program code to perform the steps of obtaining the first identity feature of the application chain, where the first identity feature of the application chain comes from logic of one or more applications in the application chain; and when the first identity feature of the application chain matches the second identity feature that is of the application chain and that is recorded in the application feature library, allowing the application chain to access the asset, so as to perform the foregoing asset access control method.

An embodiment of this application further provides a computer-readable storage medium. The computer-readable storage medium includes instructions, and the instructions instruct the device 1000 to perform the foregoing asset access control method.

An embodiment of this application further provides a computer-readable storage medium. The computer-readable storage medium includes instructions, and the instructions instruct the device 1000 to perform the foregoing asset access control method.

An embodiment of this application further provides a computer program product. When the computer program product is executed by a computer, the computer performs any one of the foregoing asset access control methods. The computer program product may be a software installation package. When any one of the foregoing asset access control methods needs to be used, the computer program product may be downloaded and executed on a computer.

## Claims

1. An asset access control method, wherein the method comprising:
obtaining a first identity feature of an application chain, wherein the first identity feature of the application chain comes from logic of one or more applications in the application chain; and
when the first identity feature of the application chain matches a second identity feature that is of the application chain and that is recorded in an application feature library, allowing the application chain to access an asset.

2. The method according to claim 1, wherein the logic of the application comprises:
logic of an input/output module of the application or logic of performing an input/output operation by the input/output module;
logic of an interface invoking module of the application or logic of performing an interface invoking operation by the interface invoking module;
logic of a command execution module of the application or logic of executing a command by the command execution module; or
logic of a resource scheduling module of the application or logic of scheduling a resource by the resource scheduling module.

3. The method according to claim 1 or 2, wherein the obtaining a first identity feature of an application chain comprises:
performing feature extraction on the application chain to obtain the first identity feature of the application chain.

4. The method according to claim 3, wherein the performing feature extraction on the application chain comprises:
performing feature extraction on the application chain each time before the application chain accesses the asset.

5. The method according to any one of claims 1 to 4, wherein the obtaining a first identity feature of an application chain comprises:
obtaining the first identity feature of the application chain when an attribute of the asset that the application chain requests to access is a target attribute.

6. The method according to any one of claims 1 to 5, wherein when a distance between a first Bloom vector corresponding to the first identity feature of the application chain and a second Bloom vector corresponding to the second identity feature of the application chain is less than a preset distance, the first identity feature of the application chain matches the second identity feature that is of the application chain and that is recorded in the application feature library.

7. The method according to any one of claims 1 to 6, wherein the method further comprises:
comparing the first identity feature of the application chain with the second identity feature that is of the application chain and that is recorded in a local or remote application feature library.

8. The method according to claim 7, wherein the method further comprises:
updating the local application feature library based on the remote application feature library.

9. The method according to any one of claims 1 to 6, wherein the method further comprises:
sending the first identity feature of the application chain to a management node, so that the management node compares the first identity feature of the application chain with the second identity feature that is of the application chain and that is recorded in a remote application feature library.

10. The method according to any one of claims 1 to 9, wherein the asset comprises any one or more of a local credential, a remote credential, or an application programming interface for accessing a target service.

11. The method according to any one of claims 1 to 10, wherein the identity feature comprises a fingerprint or a behavioral feature.

12. The method according to any one of claims 1 to 11, wherein the method is performed by a worker node on which the application chain is deployed.

13. An access control system, wherein the system comprises an access control node, and the access control node is configured to:
obtain a first identity feature of an application chain, wherein the identity feature of the application chain comes from logic of one or more applications in the application chain; and
when the first identity feature of the application chain matches a second identity feature that is of the application chain and that is recorded in an application feature library, allow the application chain to access an asset.

14. The system according to claim 13, wherein the logic of the application comprises:
logic of an input/output module of the application or logic of performing an input/output operation by the input/output module;
logic of an interface invoking module of the application or logic of performing an interface invoking operation by the interface invoking module;
logic of a command execution module of the application or logic of executing a command by the command execution module; or
logic of a resource scheduling module of the application or logic of scheduling a resource by the resource scheduling module.

15. The system according to claim 13 or 14, wherein the access control node is specifically configured to:
perform feature extraction on the application chain to obtain the first identity feature of the application chain.

16. The system according to claim 15, wherein the access control node is specifically configured to:
perform feature extraction on the application chain each time before the application chain accesses the asset.

17. The system according to any one of claims 13 to 16, wherein the access control node is specifically configured to:
obtain the first identity feature of the application chain when an attribute of the asset that the application chain requests to access is a target attribute.

18. The system according to any one of claims 13 to 17, wherein when a distance between a first Bloom vector corresponding to the first identity feature of the application chain and a second Bloom vector corresponding to the second identity feature of the application chain is less than a preset distance, the first identity feature of the application chain matches the second identity feature that is of the application chain and that is recorded in the application feature library.

19. The system according to any one of claims 13 to 18, wherein the access control node is further configured to:
compare the first identity feature of the application chain with the second identity feature that is of the application chain and that is recorded in a local or remote application feature library.

20. The system according to claim 19, wherein the access control node is further configured to:
update the local application feature library based on the remote application feature library.

21. The system according to any one of claims 13 to 20, wherein the system further comprises a management node;
the access control node is further configured to send the first identity feature of the application chain to the management node; and
the management node is configured to compare the first identity feature of the application chain with the second identity feature that is of the application chain and that is recorded in the remote application feature library.

22. The system according to any one of claims 13 to 21, wherein the asset comprises any one or more of a local credential, a remote credential, or an application programming interface for accessing a target service.

23. The system according to any one of claims 13 to 22, wherein the identity feature comprises a fingerprint or a behavioral feature.

24. The system according to any one of claims 13 to 23, wherein the access control node is a worker node on which the application chain is deployed.

25. A device, wherein the device is configured to implement a function of the access control node in the access control system according to any one of claims 13 to 24.

26. A device, wherein the device comprises a processor and a memory, wherein
the processor is configured to execute instructions stored in the memory, so that the device is enabled to perform the method according to any one of claims 1 to 12.

27. An access control apparatus, wherein the apparatus comprises:
an obtaining module, configured to obtain a first identity feature of an application chain, wherein the identity feature of the application chain comes from logic of one or more applications in the application chain; and
a control module, configured to: when the first identity feature of the application chain matches a second identity feature that is of the application chain and that is recorded in an application feature library, allow the application chain to access an asset.

28. A computer-readable storage medium, comprising instructions, wherein the instructions indicate a device to perform the method according to any one of claims 1 to 12.

29. A computer program product, wherein when the computer program product runs on a computer, the computer is enabled to perform the method according to any one of claims 1 to 12.
